(19) Europäisches Patentamt
European Patent Office
Office européen des brevets

(11) Publication number: **0 350 071 B1**

(12) **EUROPEAN PATENT SPECIFICATION**

(45) Date of publication of patent specification: **06.10.93**

(51) Int. Cl.[5]: **A01N 25/18**

(21) Application number: **89112488.5**

(22) Date of filing: **07.07.89**

(54) **Controlling agent composition.**

(30) Priority: **08.07.88 JP 170586/88**

(43) Date of publication of application:
**10.01.90 Bulletin 90/02**

(45) Publication of the grant of the patent:
**06.10.93 Bulletin 93/40**

(84) Designated Contracting States:
**BE CH DE FR GB IT LI NL SE**

(56) References cited:
**FR-A- 2 375 311**
**GB-A- 2 172 006**
**US-A- 3 364 105**

**CHEMICAL PATENTS INDEX, BASIC ABSTRACTS JOURNAL, week 8648, 28th January 1987, Section C: AGDOC, abstract no. 86-315418/48, Derwent Publications Ltd, London, GB; & JP-A-0 88 220 (HASEGAWA K.K.) 17-10-1986**

**JAPANESE PATENTS REPORT, vol. 78, no. 14, 5th May 1978, section Ch: Chemical, Derwent Publications Ltd, London, GB; & JP-A-74 102 846 (HITACHI CHEMICAL K.K.) 28-09-1974**

(73) Proprietor: **IDEMITSU PETROCHEMICAL CO. LTD.**
**1-1, Marunouchi 3-chome**
**Chiyoda-ku**
**Tokyo 100(JP)**

(72) Inventor: **Okamoto, Kouhei c/oIdemitsu Petrochem. Co. Ltd.**
**1-1, Shingu-cho**
**Tokuyama-shi Yamaguchi-ken(JP)**
Inventor: **Yasuyoshi, Matsunori c/o Idemitsu Petrochem. Co. Ltd.**
**1-1, Shingu-cho**
**Tokuyama-shi Yamaguchi-ken(JP)**

(74) Representative: **TER MEER - MÜLLER - STEINMEISTER & PARTNER**
**Mauerkircherstrasse 45**
**D-81679 München (DE)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

BACKGROUND OF THE INVENTION

1. Field of the Invention

The present invention relates to a composition containing a controlling agent (referred to sometimes as "controlling agent composition") and, more particularly, to a controlling agent composition which causes no blocking and which is moldable into favorable compression moldings causing no deforming.

2. Description of Related Art

Sublimating chemical substances having fragrance and insecticidal activities, such as naphthalene, camphor and p-dichlorobenzene have heretofore been employed singly, for example, as insecticides for clothing.

As these sublimating chemical substances are employed in many instances at places where they are to be absorbed by the human bodies, attention should be paid to problems concerning poison to human beings and animals and concerning environmental pollution.

Japanese Patent Publication No. 8,777/1978 discloses a sublimating composition comprising cyclododecane and a perfume or an insecticide as an insectide composition which is less in poison to human bodies and causing less problems with environmental pollution. Powder of the sublimating composition, however, is likely to cause blocking and to form aggregates and presents the difficulty of compression molding to form moldings or molded articles in various shapes of conventional insectides and mothproofing agents, such as plates, balls and disks, because the resulting compression moldings are brittle and likely to be broken. Accordingly, the sublimating composition should be poured into given molds and then cooled to solidify after it has been heat-molten for manufacturing molded products. This molding method combining the heat melting step with the cold solidifying step suffers the disadvantages that it is laborious and low in productivity, incurs a large loss of energy, and requires a large number of molds.

SUMMARY OF THE INVENTION

As a result of extensive studies and research, it has been found that a combination of the sublimating substance with a particular substance provides a controlling agent composition which can solve the difficulties and disadvantages demonstrated in conventional agents.

The present invention has the object to provide a composition of a controlling agent which does not cause blocking and which is moldable to favorable compression moldings causing no deforming.

In order to achieve the object, the present invention consists of the controlling agent composition comprising (A) a controlling agent; (B) cyclododecane, and (C) at least a member selected from the group consisting of colloidal silica, calcium silicate and crystalline cellulose.

DESCRIPTION OF THE PREFERRED EMBODIMENTS

The controlling agent composition according to the present invention will be described more in detail.

(A) Controlling Agent:

The term "controlling agent" referred to herein is intended to have a wide meaning as containing, for example, an agent to be used for preventing, killing or destroying animals and plants or viruses, such as bacteria, germs, nematodes, mites, insects, rodents and weeds, as well as agents to be used for controlling or preventing vermin.

In other words, the controlling agent composition according to the present invention may be used as agricultural chemicals or pesticides when employed to combat, control or prevent animals and plants harmful to crops or as chemicals when employed to combat, control or prevent vermin such as mosquitoes, flies, cockroaches and so on.

The controlling agent to be used as one of essential ingredients of the controlling agent composition according to the present invention may include, for example, microbicides, insecticides, rodenticides, nematocides, attractants, repellents, herbicides, and the like.

The microbicides may be of heavy metal type, such as quinoline copper, organomercurous agents, organotin agents and organoarsenic agents, of sulfur type, such as inorganic and organic sulfur agents, of organic phosphorous type, and of heterocyclic compound type, such as captan, triazines and benomyl.

The insecticides may be classified by one having the function to control or prevent insects and one having the function to kill them and may include, as representative of the former, camphor, naphthalene, p-dichlorobenzene, 2-ethyl-1,3-hexanediol, indalone, dimethyl phthalate and ethyl triamide, and, as representative of the latter, a pyrethrins such as natural pyrethrin and synthetic pyrethroids, e.g., allethrin, empenthrin and phthalthrin ,
rotenones, natural type insecticides, i.e., nicotine, organic phosphoric insecticides, e.g., diazinon, malathion (Malathon), dichlorvos (DDVP: O,O-dimethyl-O-2,2-dichlorovinylpyrenuroide phosphate),trichlorfon (DEP; Dipterex), fenitrothion (MEP; Sumithion), fenthion (NPP; Battex, Bycid), temephos (Abate),cyanophos (Cyanox), calvinphos, bromophos,pyridaphenthion (Ofunack), chlorpyrifosmethyl (Reldan) and prothiofos (Toyothion; Tokuthion), carbamate insecticides, e.g., propoxur (Baygon), and organochlorine insecticides, e.g., o-dichlorobenzene, BHC(1,2,3,4,5,6-hexachlorocyclohexane),DDT (p,p′-dichloro-diphenyltrichloroethane) and IBTA(isobornyltricyanoacetate. Other insecticides may include, for example, arsenic agents such as lead arsenate,calcium arsenate and manganese arsenate and nematicides such as chloropicrin and methyl bromide and the like.

The mitecides may include, for example, dinitrophenols such as binapacryl, and chlorophenyls.

The rodenticides may include, for example, yellow phosphorus, zinc phosphide, thallium sulfate, thallium nitrate, $\alpha$ -naphthyl thiourea and warfarin.

The attractants may include, for example, an attractant for cockroaches.

The repellents may include, for example, dithiocarbamates as repellents for birds and diethyl toluamide (deet) as repellant for insects.

The herbicides may include, for example, ones of a phenoxy type such as (2,4-dichlorophenoxy)acetic acid (2,4-D or 2,4-PA), 4-chloro-o-tolyloxyacetic acid (MCPA or MCP) and (2,4,5-trichlorophenoxy)acetic acid (2,4,5-T), of a phenol type such as MCP allyl ester, of a diphenylether type such as 4-nitrophenyl 2,4,6-trichlorophenyl ether (chlornitrofen or CNP), 2,4-dichlorophenyl 4-nitrophenyl ether (nitrofen or NIP) and chlomethoxynil, of an aniline type such as trifluralin, diuron (DCMU) and linuron, of a carbamate type such as benthiocarb and molinate, an amide type such as SCNA, of a nitrile type such as 3,6-dichloro-2-methoxybenzoic acid (dicamba or DBN), of a bipyridinium type, of a triazine type such as simetryn and simazine (CAT), of an aliphatic acid type such as tetrapion, and of a diazine type such as bromacil.

The controlling agents may be used singly or in combination thereof. When the insecticide, for example, is selected as a controlling agent, it is also possible to use with another insecticide.

As the controlling agent may be preferably used the insecticides among which naphthalene, camphor and p-dichlorobenzene are preferred as an agent which may be classified as one for controlling or preventing insects and BHC and pyrethroids are preferred as an agent which may be classified as one for killing insects.

(B) Cyclododecane:

Cyclododecane is formulated in the controlling agent composition according to the present invention as one of the essential ingredients in order to faciliate a dispersion of the controlling agent into ambient atmosphere such as air or soil.

Cyclododecane is a crystalline substance of a cyclic hydrocarbon, which has 12 carbon atoms, a melting point of 61 °C and a boiling point of 240°C as well as is transparent and colorless. It sublimates at room temperature as fast as naphthalene. It may be generally prepared by trimerizing butadine in the presence of a nickel catalyst and then hydrogenating as disclosed in Japanese Patent Publication No. 7,767/1968.

Unlike other usual hydrocarbons, cyclododecane is not too soft and sticky because it is not waxy in its crystalline state, it possesses a surprisingly favorable crystallizability, it is very hard, and it provides a clean feeling. Furthermore, if it is admixed with a fragrant agent, it can give a sufficiently solid shaped products.

In order to enhance properties of cyclododecane itself, it is preferred to select the controlling agent of the type killing insects, as have been described hereinabove.

Cyclododecane itself has the property of facilitating a dispersion of other effective ingredients formulated in the controlling agent composition into ambient atmosphere, yet it little has activities of preventing and/or killing insects. As cyclododecane sublimates, the effective ingredients contained in the composition are caused to be dispersed into ambient atmosphere, thus demonstrating the effects of preventing and/or controlling insects.

(C) Silicon Compound or Cellulose:

As another essential ingredient that is the most characteristic of the present invention, there is used at least a member selected from the group of colloidal silica, calcium silicate and crystalline cellulose. This ingredient serves as improving powdery characteristics and compression molding capabilities for the controlling agent composition according to the present invention.

Colloidal Silica:

Colloidal silica is a silica in a form of sol or jelly and has a particle size ranging generally from 1 to 100 $\mu$ m, preferably from 5 to 50$\mu$ m. It may be generally prepared by hydrolyzing silicon tetrachloride at high temperatures and then gradually adding an alkali silicate aqueous solution to concentrated hydrochloric acid.

As colloidal silica is excellent in absorptivity and in adhereability, it serves as maintaining the controlling agent and cyclododecane in a stable state over a long period of time, thus permitting their effects to be achieved for such a long time.

Calcium Silicate:

Calcium silicate is a generic term for a compound in which calcium oxide is bonded to silica and may be generally prepared by calcining or melting calcium oxide and silica at high temperatures. It has a ratio of CaO to $SiO_2$ ranging generally from 0.1:99.9 to 75:25, preferably from 1:99 to 50:50, and a particle size ranging generally from 0.1 to 500 $\mu$ m, preferably from 1 to 100 $\mu$ m.

Calcium silicate can exhibit substantially the same effects as colloidal silica.

Crystalline Cellulose:

Crystalline cellulose can also exhibit substantially the same effects as colloidal silica and calcium silicate.

In order to allow the crystalline cellulose to exhibit desired effects, it is preferred that the crystalline cellulose has a crystallinity as high as at least 30%, particularly over 70%. Furthermore, it is preferred that the crystalline cellulose has a degree of polymerization ranging 100 to 6,000.

As the crystalline cellulose which may be preferably used for the present invention there may be selected a natural cellulose contained in cotton, kapok, flax plant, hemp, jute, ramie, Manila hemp, sisal and silk and a crystalline cellulose obtainable by hydrolyzing a natural cellulose and washing off their amorphous portions. Regenrated fiber such as viscose rayon and copper ammonia rayon may also be optionally used although it is not so high in crystallinity.

(D) Fragrant Agent:

A fragrant agent for the controlling agent according to the present invention is an optional ingredient, however, it may be preferably used for the controlling agent for controlling vermin although it is not particularly required to be used when the controlling agent composition is used as soil fungicide composition and soil pesticide composition.

The fragrant agent serves as deodorizing undesirable odors from ingredients contained in the composition and providing fragrance stronger than such odors, thus generating a pleasant smell from the composition.

The fragrant agents may include, for example, natural perfumes such as anethole, angelic acid, linalool, geraniol, irone, pinene, citronellal, jasmone, anisaldehyde, limonene, vanila and nerol, and a synthetic perfume. There also may be used other natural perfumes as a mixture of fragrant substances, such as anise oil, orange oil, cinnamon oil, jasmine oil, sugi oil, spearmint oil, rose oil, lemon oil, and rosemarie oil. The fragrant agent may be used singly or in combination thereof.

(E) Other Ingredients:

The controlling agent composition may contain additives including, for example, a solid diluent such as diatomaceous earth, talc, clay and acid clay, a lubricant such as stearic acid and solid paraffin, solidifying agent such such as polyvinyl alcohol, emulsifier, and colarant.

As an amount of the controlling agent (A) may vary with amounts of cyclododecane (B), it cannot be determined in a specific range although it may generally range from 0.01 to 500 parts by weight with resepct to 100 parts by weight of cyclododecane (B). When the controlling agent (A) is an agent for preventing insects, the amount of the controlling agent (A) may range generally from 0.1 to 500 parts by weight, preferably from 0.5 to 100 parts by weight, with respect to 100 parts by weight of cyclododecane (B). When the controlling agent (A) is an agent for killing insects, it may be used in amounts ranging generally from 0.01 to 100 parts by weight, preferably from 0.1 to 50 parts by weight, based on 100 parts by weight of cyclododecane (B). If the agent for preventing insects is used in combination with the agent for killing insects, their total weight may be used in amounts ranging generally from 0.01 to 500 parts by weight, preferably from 0.1 to 100 parts by weight, with respect to the total weight to 100 parts by weight of cyclododecane (B). If the amount of the controlling agent is below the lower limit, no effects can be achieved as expected by using the controlling agent. If the controlling agent is used in amounts above the upper limit, its effect becomes too strong that it may adversely affect objects to be treated, leading eventually to adverse effects upon human beings and animals.

An amount of the ingredient (C) may vary with its kinds. Colloidal silica, calcium silicate and crystalline cellulose may be used each in amounts ranging generally from 0.1 to 500 parts by weight, preferably from 1 to 100 parts by weight, with respect to 100 parts by weight of cyclododecane (B). When the ingredient (C) is used in combination with the other, their total amount may range generally from 0.1 to 500 parts by weight, preferably from 1 to 100 parts by weight, on the basis of 100 parts by weight of cyclododecane (B). If the amount of the ingredient (C) is below the lower limit, the controlling agent composition becomes likely to cause blocking when it is pulverized and it becomes brittle and likely to be destroyed when formed to various sahpes of compression moldings.

The controlling agent composition may be prepared by admixing all the ingredients at the same time or by admixing first cyclododecane with the ingredient (C) and then the mixture with the controlling agent followed by the mixing with the fragrant agent and the other ingredient, if necessary.

The admixture may be carried out by stirring the ingredients at temperatures ranging generally from 0 °C to 200 °C , preferably from 0 °C to 80 °C , for a period of time ranging generally from 30 minutes to 50 hours, preferably from 6 minutes to 10 hours under elevated pressures, preferably below 20 atm. or under ambient atmosphere.

The admixture may be carried out by fusing cyclododecane, the controlling agent and the fragrant agent and then mixing the fused mixture with the ingredient (C) or after each of the ingredients is pulverized. When they are used in the form of powder, they may have average particle sizes ranging below 1 mesh, preferably below 16 meshes.

The formulation obtained by the above admixture may then be shaped using a pressure molding machine into various forms. The pressure molding may be effected under conventional molding conditions to be used for manufacturing tablets.

The controlling agent composition according to the present invention will be described by way of examples, but it is to be noted as a matter of course that the present invention is considered in all respects to be illustrative and not restrictive.

Example 1:

A mixture of 100 parts by weight of cyclododecane with colloidal silica ("Aerosil 200"; Nihon Aerosil K.K.) and 5 parts by weight of naphthalene was kneaded with a kneader (K.K. Inoue Seisakusho) at 80 °C for 30 minutes, yielding a composition of an insect preventive agent. The composition was then pulverized with a ball mill at room temperature for 1 hour.

The resulting composition in a powdery form was then sieved with a 12-mesh sieve and its dispersibility was evaluated by an amount of the powder which has passed therethrough. Results are shown in Table below.

The powdery composition was then tabletted with a tablet machine (Model: "Spaltan E-150"; Hata Tekkosho K.K.) and the resulting tablets were evaluated by dropping them onto an iron plate from the height of 30 cm. Results are shown in Table below. In the Table below, the evaluation was rated as follows:

○ : No abnormality shown.

△ : Cracking caused.

Examples 2 - 5 and Comparative Examples 1 and 2:

The procedures were followed in the same manner as in Example 1 except that the ingredients were admixed in amounts as shown in Table below.

Evaluation results are also shown in Table below.

TABLE

| Composition (wt. part) & Evaluation Rates | | EXAMPLES | | | | | COMPARATIVE EX. | |
|---|---|---|---|---|---|---|---|---|
| | | 1 | 2 | 3 | 4 | 5 | 1 | 2 |
| Cyclododecane | | 100 | 100 | 100 | 100 | 100 | 100 | 100 |
| Colloidal silica | | 18[*1] | 15[*2] | - | 5[*1] | - | - | - |
| Crystalline cellulose[*3] | | - | - | 10 | 10 | 10 | - | - |
| Calcium silicate[*4] | | - | - | - | - | 5 | - | - |
| Controlling Agent | Naphthalene | 5 | - | 5 | - | 10 | 5 | - |
| | p-Dichlorobenzene | - | 5 | - | - | - | - | 5 |
| | BHC | - | - | - | 0.5 | - | - | - |
| | Pyrethrin[*5] | - | 1 | - | 1 | - | - | 1 |
| Fragrant Agent | Linalool | - | - | - | - | 0.1 | - | - |
| | Vanilla | - | - | - | - | 0.05 | - | - |
| Dispersibility (% by wt) | | >99 | >99 | >99 | >99 | >99 | 0[*6] | 0[*6] |
| Moldability | | ○ | ○ | ○ | ○ | ○ | △ | △ |

Notes: Superscript numbers:

*1: Trade name: Aerosil 200 (Nihon Aerosil K.K.)

*2: Trade name: Rheolosil QS-102 (Tokuyama Soda K.K.)

*3: Trade name: Avicel RC-591 (FMC Corp.)

*4: Trade name: Flowlite R (Tokuyama Soda K.K.)

*5: Pyrethroid compound:

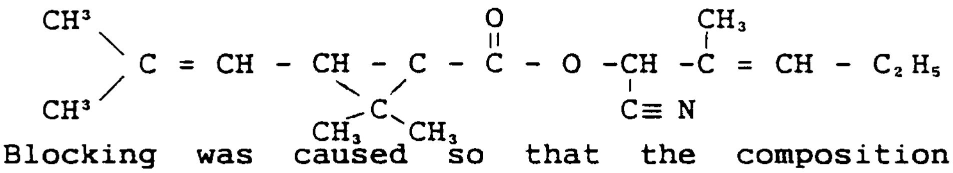

*6: Blocking was caused so that the composition could not be readily withdrawn from the ball mill.

It has been found from the results as shown in the Table above that the composition according to the present invention causes no blocking when pulverized to a powdery form because it contains the ingredient (C). The composition can be also formed to compression moldings which can be readily handled and which is unlikely to be destroyed. The compression moldings can be further produced with a higher productivity and a smaller consumption of energy than those prepared by conventional heat melt molding method. The composition according to the present invention is also excellent because it can be readily molded at room temperature.

## Claims

**1.** A composition for controlling harmful animals, plants or viruses comprising
a) 0.01 to 500 parts by weight of an agent for preventing, killing or destroying animals, plants or viruses,
b) 100 parts by weight of cyclododecane and
c) 0.1 to 500 parts by weight of at least one member selected from the group consisting of calcium silicate, crystalline cellulose and colloidal silica.

**2.** The composition as claimed in claim 1, further comprising a fragrant agent.

**3.** The composition as claimed in claim 1, wherein said colloidal silica has an average particle size ranging form 1 to 100 $\mu$m.

**4.** The composition as claimed in claim 1, wherein said calcium silicate has a molar ratio of CaO to $SiO_2$ ranging from 0.1:99.9 to 75:25.

**5.** The composition as claimed in claim 1, wherein said calcium silicate has an average particle size ranging from 1 to 100 $\mu$m.

**6.** The composition as claimed in claim 1, wherein said crystalline cellulose has a degree of polymerization ranging from 100 to 6,000.

## Patentansprüche

**1.** Zusammensetzung zur Bekämpfung bzw. Regulierung schädlicher Tiere, Pflanzen oder Viren, umfassend
(a) 0,01 bis 500 Gew.-Teile eines Mittels zur Verhinderung, Tötung oder Zerstörung von Tieren, Pflanzen oder Viren,
(b) 100 Gewichtsteile Cyclododecan und
(c) 0,1 bis 500 Gewichtsteile mindestens eines Vertreters, welcher aus der aus Calciumsilicat, kristalliner Cellulose und kolloidalem Siliciumoxid bestehenden Gruppe gewählt ist.

**2.** Zusammensetzung nach Anspruch 1, umfassend weiterhin ein Duftstoffmittel.

**3.** Zusammensetzung nach Anspruch 1, wobei das kolloidale Siliciumoxid eine durchschnittliche Teilchengröße im Bereich von 1 bis 100 $\mu$m besitzt.

4. Zusammensetzung nach Anspruch 1, wobei das Calciumsilicat ein molares Verhältnis von CaO zu $SiO_2$ im Bereich von 0,1:99,9 bis 75:25 besitzt.

5. Zusammensetzung nach Anspruch 1, wobei das Calciumsilicat eine durchschnittliche Teilchengröße im Bereich von 1 bis 100 µm besitzt.

6. Zusammensetzung nach Anspruch 1, wobei die kristalline Cellulose einen Polymerisationsgrad im Bereich von 100 bis 6000 besitzt.

## Revendications

1. Composition pour contrôler les animaux, plantes ou virus nuisibles, comprenant :
   a) 0,01 à 500 parties en poids d'un agent pour prévenir, tuer ou détruire les animaux, plantes ou virus ;
   b) 100 parties en poids de cyclododécane ; et
   c) 0,1 à 500 parties en poids d'au moins un membre sélectionné du groupe consistant en silicate de calcium, en cellulose cristalline et en silice colloïdale.

2. Composition selon la revendication 1, comprenant en plus un agent odorant.

3. Composition selon la revendication 1, dans laquelle ladite silice colloïdale a une taille moyenne de particule de 1 à 100 µm.

4. Composition selon la revendication 1, dans laquelle ledit silicate de calcium a un rapport molaire de CaO sur $SiO_2$ allant de 0,1:99,9 à 75:25.

5. Composition selon la revendication 1, dans laquelle ledit silicate de calcium a une taille moyenne de particule de 1 à 100 µm.

6. Composition selon la revendication 1, dans laquelle ladite cellulose cristalline a un degré de polymérisation de 100 à 6.000.